(19) **Europäisches Patentamt**
**European Patent Office**
**Office européen des brevets**

(11) **EP 4 267 411 B1**

(12) **EUROPEAN PATENT SPECIFICATION**

(45) Date of publication and mention
of the grant of the patent:
**12.03.2025 Bulletin 2025/11**

(21) Application number: **20842328.5**

(22) Date of filing: **22.12.2020**

(51) International Patent Classification (IPC):
**B60C 11/00** *(2006.01)*  **B60C 11/24** *(2006.01)*

(52) Cooperative Patent Classification (CPC):
**B60C 11/005; B60C 11/0058; B60C 11/24;
B60C 2011/0025**

(86) International application number:
**PCT/JP2020/047831**

(87) International publication number:
**WO 2022/137316 (30.06.2022 Gazette 2022/26)**

(54) **A TIRE TREAD FOR LONG LASTING PERFORMANCE**

REIFENLAUFFLÄCHE FÜR LANGZEITLEISTUNG

BANDE DE ROULEMENT DE PNEU POUR PERFORMANCES DE LONGUE DURÉE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**01.11.2023 Bulletin 2023/44**

(73) Proprietor: **COMPAGNIE GENERALE DES
ETABLISSEMENTS MICHELIN
63000 Clermont-Ferrand (FR)**

(72) Inventors:
• **UCHIDA, Tomotake
Tokyo 163-1073 (JP)**

• **YOKOKAWA, Kazutaka
Tokyo 163-1073 (JP)**
• **YAMAMOTO, Ryosuke
Tokyo 163-1073 (JP)**

(74) Representative: **M.F.P. Michelin
DCJ/PI - F35 - Ladoux
23 place des Carmes-Déchaux
63040 Clermont-Ferrand Cedex 9 (FR)**

(56) References cited:
CN-U- 211 808 861    JP-A- 2001 080 314
JP-A- 2007 168 651    KR-A- 20040 029 611
US-B2- 6 736 174

**Description**

[Technical Field]

The present invention relates to a tread for a tire, in particular to a tread for a tire possible to maintain high level performance on wintry and on non-wintry surface until close to end of wear life.

[Background Art]

In recent years, a tire so-called "all-season" tire which has capability to drive on wintry surface while maintaining high speed driving capability on non-wintry surface is beginning to popularize.

Also to a tire so-called "studless" tire which is suitable for driving on ice covered and/or snow covered wintry surface, there is a desire to increase performance on non-wintry surface that is not covered by ice nor snow while still improving performance on wintry surface.

In order to maintain performance on wintry surface especially snow performance, it is known to decrease a stiffness of a tread in a region close to a bottom of a groove is effective. It is also known that such the way impacts negatively performance on non-wintry surface.

EP0378090 discloses a tread for a tire having a block (an element in relief) provided with incisions whose cross-section having a fork-shaped outline with at least two branches forming an extension of a single part, a number of incisions in the block (the element in relief) being multiplied by a factor equal to at least 1.5 starting from a depth of the double-branched incision.

JP2006-142843 discloses a tire having a block consisting of a cap rubber layer and a base rubber layer superposed in radial orientation, the cap rubber layer includes alumina-containing cylindrical shaped closed cell foams and the base rubber layer includes spherical shaped closed cell foams.

JP2002-079807 discloses a tire having a tread formed by at least two layers consisting of a cap rubber layer and a base rubber layer, the base rubber layer includes hollow particles having a mean particle diameter of at most equal to 500 $\mu$m mixed in a volume ratio of 2% to 40%.

JP2007-168651 discloses a tire having a plurality of blocks comprising three layers rubber block consisting of a cap rubber layer, a middle rubber layer and a base rubber layer, a 100% modulus of each the rubber layers is higher at the base rubber layer, then the cap rubber layer and then the middle rubber layer.

JP2006-306281 discloses a tread for a tire having a cap tread and two layers of base treads, JISA hardness of the cap tread is from 40 to 50, JISA hardness of outer base tread is from 70 to 80 provided with a thickness more than or equal to 1.5 mm and JISA hardness of inner base tread is from 55 to 70 provided with a thickness more than or equal to 0.3 mm.

JP2001-080314 discloses a tire provided with lamination of a cap tread and a base tread having different hardness from one another, provided with a tread separating layer between the cap tread and the base tread having higher hardness than both the cap tread and the base tread.

[Citation List]

[Patent Literature]

[PTL 1]
EP0378090
[PTL 2]
JP2006-142843
[PTL 3]
JP2002-079807
[PTL 4]
JP2007-168651
[PTL 5]
JP2006-306281
[PTL 6]
JP2001-080314

However with the solutions disclosed in these documents, bottom portion of a tread (or a block) consisting of double-branched incision, spherical shaped closed cell foam or hollow particles is too soft due to increased number of incisions, closed cell foam or hollow particles impacts negatively from the beginning of tire life, and multilayer tread solutions are not satisfactory for performance close to end of life especially on performance on wintry surface. Thus there is a desire to provide improvement of performance close to end of life of the tread especially performance on wintry surface.

Therefore, there is a need for a tread for a tire which provides improvement of performance close to end of life especially on performance on wintry surface, while maintaining performance on non-wintry surface and endurance performance.

Definitions:

A "radial direction/orientation" is a direction/orientation perpendicular to axis of rotation of the tire. This direction/orientation corresponds to thickness orientation of the tread.

An "axial direction/orientation" is a direction/orientation parallel to axis of rotation of the tire.

A "circumferential direction/orientation" is a direction/orientation which is tangential to any circle centered on axis of rotation. This direction/orientation is perpendicular to both the axial direction/orientation and the radial direction/orientation.

A "tire" means all types of elastic tire whether or not subjected to an internal pressure.

A "tread" of a tire means a quantity of rubber material bounded by lateral surfaces and by two main surfaces one of which is intended to come into contact with ground when the tire is rolling.

A "groove" is a space between two rubber faces/sidewalls which do not contact between themselves under usual rolling condition connected by another rubber face/ bottom. A groove has a width and a depth.

An "incision", also referred to as a "sipe" is a narrow cutout formed toward radially inwardly from a surface of a tread made by, for example a thin blade having a shape like a knife blade. A width of the incision at the surface of the tread is narrower than a groove, for example less than or equal to 2.0mm. this incision may, different from the groove, be partly or completely closed when such the incision is in a contact patch and under usual rolling condition.

A "contact patch" is a footprint of a tire mounted onto its standard rim as identified in tire standards such as ETRTO, JATMA or TRA, and inflated at its nominal pressure and under its nominal load. A "width TW" of a contact face is a maximum contact width of the contact patch along with an axis of rotation of the tire.

A modulus G* is the dynamic shear complex modulus of the material at 60°C. The storage elastic modulus represented by G' and the loss elastic modulus represented by G", which are well known dynamic properties for one skilled in the art, are measured by means of a viscosity analyzer (microanalyzer: Metravib VB4000) using a test piece molded from the raw composition or a test piece which is combined with the composition after vulcanization. The test piece that is used is one that is described in Figure X2.1 (a circular method) of the standard ASTM D 5992-96 (version published September 2006, initially approved in 1996). The diameter 'd' of the test piece is 10 mm (consequently the test piece has a circular cross section of 78.5 mm2), the thickness 'L' of each part of the rubber compound is 2 mm, and the ratio 'd/L' (described in paragraph X2.4 of the ASTM standard, in contrast to the ratio 'd/L' of 2 recommended in the standard ISO 2856) is 5. In the test, the response of a test piece comprising a vulcanized rubber composition subjected to a simple alternating sinusoidal shear load is measured at a frequency of 10 Hz. The maximum shear stress imposed during the test is 0.7 MPa. The test is conducted by varying the temperature from Tmin, which is a temperature lower than the glass transition temperature (Tg) of the rubber material, to a maximum temperature Tmax, in the vicinity of 100°C, at a rate of 1.5°C per minute. The test piece is stabilized for approximately 20 minutes at Tmin prior to the start of the test in order to obtain a satisfactory uniformity of temperature within the test piece. The results obtained are the storage elastic modulus (G') and the loss elastic modulus (G") at the prescribed temperature. The complex modulus G* is defined in terms of the absolute values of the storage elastic modulus and the loss elastic modulus using the following formula:

$$G^* = \sqrt{G'^2 + G''^2}$$

It is thus an object of the invention to provide a tread for a tire, such the tread can provide improvement of performance close to end of life especially on wintry surface, while maintaining performance on non-wintry surface and endurance performance.

[Summary of Invention]

The present invention provides a tread for a tire having a contact face intended to come into contact with ground during rolling, the tread being provided with a plurality of grooves of a depth D opening to the contact face, and a plurality of contact elements being delimited by the plurality of grooves, each the plurality of contact elements having a top face constituting a part of the contact face, at least part of the plurality of grooves being provided with a wear indicating mean indicating a legal wear limit of the tread, the tread comprising at least two rubber layers, at least one first rubber layer and at least one second rubber layer, the first rubber layer being located radially outward of the second rubber layer and being provided together with a separating layer intended to connect with another rubber layer at radially inward of the first rubber layer, and the second rubber layer being provided without the separating layer, a material constituting the separating layer satisfies following relationship:

$$200 \leq \frac{G^{*2.5}}{C} \leq 1200$$

where G* is a modulus G* at 60°C of the material constituting the separating layer and C is an amount of wear in mm$^3$ of the material constituting the separating layer measured in accordance with JIS K 7218, method A.

This arrangement provides an improvement of performance close to end of life especially on wintry surface.

Since the tread comprising at least two rubber layers, at least one first rubber layer and at least one second rubber layer, the first rubber layer being located radially outward of the second rubber layer and being provided together with a separating layer intended to connect with another rubber layer at radially inward of the first rubber layer, and the second rubber layer being provided without the separating layer, the separating layer molded as to extend radially in particular at the bottom portion of the contact element and above the wear indicating mean indicating the legal wear limit of the tread makes it possible to create continuously a roughness on the top face in a form of a rivulet or a micro groove acts as an extra micro edge and a volume to trap snow particles or water film until the end of life. Therefore it is possible to improve performance on wintry surface until close to end of life.

Inventors have found that by making the material constituting the separating layer as to satisfy following relationship:

$$200 \leq \frac{G^{*2.5}}{C} \leq 1200$$

where G* is a modulus G* at 60°C of the material constituting the separating layer in MPa and C is an amount of wear in mm$^3$ of the material constituting the separating layer measured in accordance with JIS K 7218, method A, the separating layer wears faster than both the first rubber layer and the second rubber layer and continue generating/regenerating the roughness on the top face. Therefore it is further possible to improve performance on wintry surface until close to end of life.

If this value is smaller than 200, there is a risk that the separating layer wears slower than both the first rubber layer and the second rubber layer resulting significant decrease of contact area of the top face. If this value is greater than 1200, there is a risk that the separating layer wears too fast resulting decrease of endurance performance. By setting the material constituting the separating layer as to satisfy the following relationship:

$$200 \leq \frac{G^{*2.5}}{C} \leq 1200$$

it is possible to improve performance on wintry surface until close to end of life.

In another preferred embodiment, a volume of the separating layer in each the contact element above a height equivalent to the wear indicating mean is less than 20%.

If this volume of the separating layer in each the contact element above the height equivalent to the wear indicating mean is more than 20%, there is a risk of performance degradation in particular on wintry surface due to reduction of contact surface with the first rubber layer or the second rubber layer. By setting the volume of the separating layer in each the contact element above the height equivalent to the wear indicating mean less than 20%, it is possible maintain performance in particular on wintry surface.

The volume of the separating layer in each the contact element above the height equivalent to the wear indicating mean is preferably less than 18%, more preferably less than 15%.

In another preferred embodiment, radially outermost of the second rubber layer in each the contact element on a plane perpendicular to both the top face and axis of rotation of the tire is at least equal to 0.5 mm radially outward from the height equivalent to the wear indicating mean.

If this radially outermost of the second rubber layer in each the contact element on the plane perpendicular to both the top face and axis of rotation of the tire is less than 0.5 mm radially outward from the height equivalent to the wear indicating mean, there is a risk that enough volume of the roughness would not be created even close to end of life thus performance close to end of life cannot be improved. By setting this radially outermost of the second rubber layer in each the contact element on the plane perpendicular to both the top face and axis of rotation of the tire at least equal to 0.5 mm radially outward from the height equivalent to the wear indicating mean, it is possible to improve performance close to end of life.

This radially outermost of the second rubber layer in each the contact element on the plane perpendicular to both the top face and axis of rotation of the tire is preferably at least equal to 0.8 mm radially outward from the height equivalent to the wear indicating mean, more preferably at least equal to 1.0 mm radially outward from the height equivalent to the wear indicating mean.

In another preferred embodiment, the separating layer is at least equal to 0.2 mm distant from any outline of the contact element.

If the separating layer is less than 0.2 mm distant from any outline of the contact element, there is a risk that the separating layer becomes an initiation point of failure due to stress concentration during rolling leading degradation of endurance performance. By setting this separating layer at least equal to 0.2 mm distant from any outline of the contact element, it is possible to maintain endurance performance.

The separating layer is preferably at least equal to 0.5 mm distant from any outline of the contact element, more preferably at least equal to 0.8mm distant from any outline of the contact element and still more preferably at least equal to 1.0 mm distant from any outline of the contact element.

In another preferred embodiment, the tread comprises one first rubber layer and one second rubber layer.

According to this arrangement, it is possible to manufacture the tread without any adaptation or with minimum adaptation to manufacturing process.

In another preferred embodiment, a rubber composition constituting the first rubber layer is the same as a rubber composition constituting the second rubber layer.

According to this arrangement, it is possible to manufacture efficiently the tread as the rubber composition constituting the contact element is the same other than the separating layer.

In another preferred embodiment, the tread further comprises a base rubber layer located radially inward of the height equivalent to the wear indicating mean.

According to this arrangement, it is possible to tune performance other than grip performance, for example handling performance or rolling resistance, without impacting grip performance thanks to the base rubber layer located radially inward of the height equivalent to the wear indicating mean.

[Advantageous Effects of Invention]

According to the arrangements described above, it is possible to provide an improvement of performance close to end of life especially on wintry surface, while maintaining performance on non-wintry surface and endurance performance.

[Brief Description of Drawings]

Other characteristics and advantages of the invention arise from the description made hereafter in reference to the annexed drawings which show, as nonrestrictive examples, the embodiment of the invention.

In these drawings:

[Fig. 1]

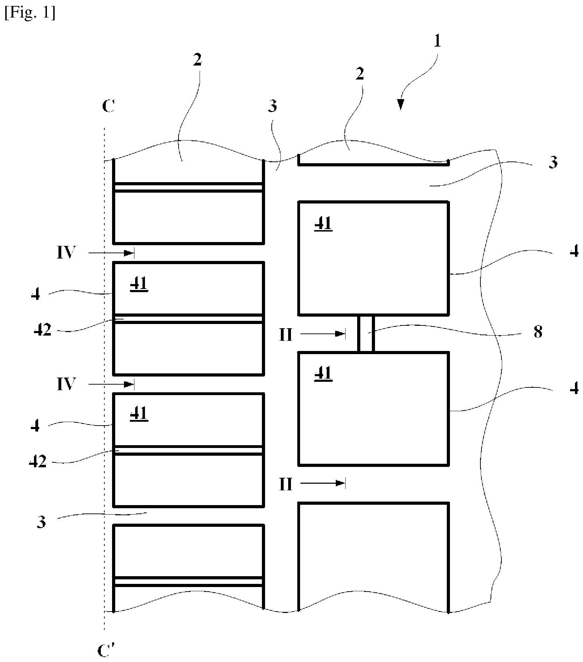

Fig. 1 is a schematic plan view of a tread according to a first embodiment of the present invention;
[Fig. 2]

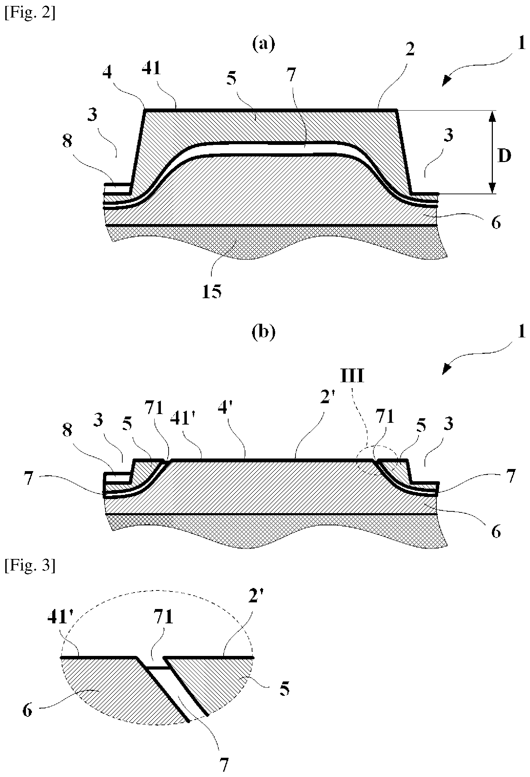

Fig. 2 is a schematic cross sectional view taken along line II-II in Fig. 1 at (a) new state and (b) worn state;
[Fig. 3]
Fig. 3 is an enlarged schematic view showing a portion indicated as III in Fig. 2 (b);
[Fig. 4]

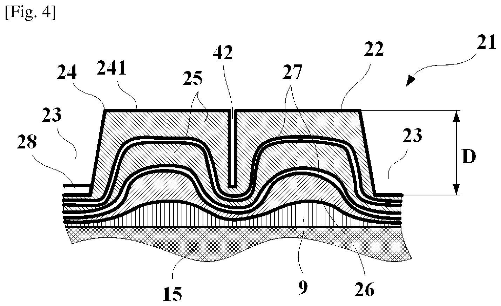

Fig. 4 is a schematic cross sectional view of a tread according to a second embodiment of the present invention corresponding to the position taken along line IV-IV in Fig. 1;

[Description of Embodiments]

Preferred embodiments of the present invention will be described below referring to the drawings.

A tread 1 for a tire according to a first embodiment of the present invention will be described referring to Figs. 1, 2 and 3. Fig. 1 is a schematic plan view of a tread according to a first embodiment of the present invention. Fig. 2 is a schematic cross sectional view taken along line II-II in Fig. 1 at (a) new state and (b) worn state. Fig. 3 is an enlarged schematic view showing a portion indicated as III in Fig. 2 (b).

The tread 1 is a tread for a tire having dimension 225/45R17 and having a contact face 2 intended to come into contact with the ground during rolling, and provided with a plurality of grooves 3 of a depth D (shown in Fig. 2) opening to the contact face 2. The tread 1 comprising a plurality of contact elements 4 being delimited by the plurality of grooves 3.

As shown in Fig. 1, the tread 1 is provided to have the plurality of contact elements 4, each the contact element 4 close to a center of the tread 1 indicated in line C - C' that is parallel to circumferential orientation of the tread 1 is provided with one incision 42 opening to a top face 41 constituting a part of the contact face 2, and each the contact element 4 axially outward from the contact element 4 provided with the incision 42 is provided without anything open to the top face 41. One of the groove 3 among the plurality of grooves 3 is provided with a wear indicating mean 8 indicating a legal wear limit of the tread 1.

As shown in Fig. 2 (a), the tread 1 comprises at least two rubber layers, at least one first rubber layer 5 and at least one second rubber layer 6, the first rubber layer 5 is located radially outward of the second rubber layer 6 and is provided together with a separating layer 7 intended to connect with another rubber layer at radially inward of the first rubber layer 5, and the second rubber layer 6 is provided without the separating layer. The tread 1 is provided above plies 15, a package of contractual reinforcements of tire in general that includes at least a carcass and a belt if a radial tire construction. In this first embodiment, the tread 1 comprises one first rubber layer 5 provided with the separating layer 7 and one second rubber layer 6. A material constituting the first rubber layer 5 and a material constituting the second rubber layer 6 are different.

As shown in Fig. 2 (a), a volume of the separating layer 7 in each the contact element 4 above the height equivalent to the wear indicating mean 8 is less than 20%, and radially outermost of the second rubber layer 6 in each the contact element 4 on the plane perpendicular to both the top face 41 and axis of rotation of the tire is at least equal to 0.5 mm radially outward from the height equivalent to the wear indicating mean 8. The separating layer 7 is at least equal to 0.2 mm distant from any outline of the contact element 4. In this first embodiment, the volume of the separating layer 7 in each the contact element 4 above the height equivalent to the wear indicating mean 8 is 13%, and radially outermost of the second rubber layer 6 in each the contact element 4 on the plane perpendicular to both the top face 41 and axis of rotation of the tire is 4.0 mm.

As shown in Fig. 2 (b) and Fig. 3, at worn state of the tread 1 and close to end of life as indicated by the wear indicating mean 8, both the first rubber layer 5 and the second rubber layer 6 are appeared on a worn top face 41' of a worn contact element 4' which is constituting a part of a worn contact face 2'. Also at the same time between the first rubber layer 5 and the second rubber layer 6 on the worn top face 41', a rivulet 71 which has a small depth below the worn contact face 2' is created thanks to the separating layer 7 wears faster than both the first rubber layer 5 and the second rubber layer 6.

A material constituting the separating layer 7, that is different from both the material constituting the first rubber layer 5 and the material constituting the second rubber layer 6, is designed as to satisfy following relationship:

$$200 \leq \frac{G^{*2.5}}{C} \leq 1200$$

where G* is a modulus G* at 60°C of the material constituting the separating layer 7 in MPa and C is an amount of wear in mm$^3$ of the material constituting the separating layer 7 measured in accordance with JIS K 7218, method A. In this first embodiment, this value of the separating layer 7 is 357 where G* was 1.29 and C was 0.0053.

Since the tread 1 comprising at least two rubber layers, at least one first rubber layer 5 and at least one second rubber layer 6, the first rubber layer 5 being located radially outward of the second rubber layer 6 and being provided together with a separating layer 7 intended to connect with another rubber layer at radially inward of the first rubber layer 5, and the second rubber layer 6 being provided without the separating layer, the separating layer 7 molded as to extend radially in particular at the bottom portion of the contact element 4 and above the wear indicating mean 8 indicating the legal wear limit of the tread 1 makes it possible to create continuously a roughness on the top face 41 in a form of a rivulet 71 or a micro groove acts as an extra micro edge and a volume to trap snow particles or water film until the end of life. Therefore it is possible to improve performance on wintry surface until close to end of life.

Inventors have found that by making the material constituting the separating layer 7 as to satisfy following relationship:

$$200 \leq \frac{G^{*2.5}}{C} \leq 1200$$

where G* is a modulus G* at 60°C of the material constituting the separating layer 7 in MPa and C is an amount of wear in mm³ of the material constituting the separating layer 7 measured in accordance with JIS K 7218, method A, the separating layer 7 wears faster than both the first rubber layer 5 and the second rubber layer 6 and continue generating/regenerating the roughness on the top face 41. Therefore it is further possible to improve performance on wintry surface until close to end of life.

If this value is smaller than 200, there is a risk that the separating layer 7 wears slower than both the first rubber layer 5 and the second rubber layer 6 resulting significant decrease of contact area of the top face 41. If this value is greater than 1200, there is a risk that the separating layer 7 wears too fast resulting decrease of endurance performance. By setting the material constituting the separating layer 7 as to satisfy the following relationship:

$$200 \leq \frac{\bar{G}^{*2.5}}{C} \leq 1200$$

it is possible to improve performance on wintry surface until close to end of life.

Since the volume of the separating layer 7 in each the contact element 4 above the height equivalent to the wear indicating mean 8 is less than 20%, it is possible maintain performance in particular on wintry surface.

If this volume of the separating layer 7 in each the contact element 4 above the height equivalent to the wear indicating mean 8 is more than 20%, there is a risk of performance degradation in particular on wintry surface due to reduction of contact surface with the first rubber layer 5 or the second rubber layer 6.

The volume of the separating layer 7 in each the contact element 4 above the height equivalent to the wear indicating mean 8 is preferably less than 18%, more preferably less than 15%.

Since radially outermost of the second rubber layer 6 in each the contact element 4 on the plane perpendicular to both the top face 41 and axis of rotation of the tire is at least equal to 0.5 mm radially outward from the height equivalent to the wear indicating mean 8, it is possible to improve performance close to end of life.

If this radially outermost of the second rubber layer 6 in each the contact element 4 on the plane perpendicular to both the top face 41 and axis of rotation of the tire is less than 0.5 mm radially outward from the height equivalent to the wear indicating mean 8, there is a risk that enough volume of the roughness would not be created even close to end of life thus performance close to end of life cannot be improved.

This radially outermost of the second rubber layer 6 in each the contact element 4 on the plane perpendicular to both the top face 41 and axis of rotation of the tire is preferably at least equal to 0.8 mm radially outward from the height equivalent to the wear indicating mean 8, more preferably at least equal to 1.0 mm radially outward from the height equivalent to the wear indicating mean 8.

Since the separating layer 7 is at least equal to 0.2 mm distant from any outline of the contact element 4, it is possible to maintain endurance performance.

If the separating layer 7 is less than 0.2 mm distant from any outline of the contact element 4, there is a risk that the separating layer 7 becomes an initiation point of failure due to stress concentration during rolling leading degradation of endurance performance.

The separating layer 7 is preferably at least equal to 0.5 mm distant from any outline of the contact element 4, more preferably at least equal to 0.8mm distant from any outline of the contact element 4 and still more preferably at least equal to 1.0 mm distant from any outline of the contact element 4.

Since the tread 1 comprises one first rubber layer 5 and one second rubber layer 6, it is possible to manufacture the tread 1 without any adaptation or with minimum adaptation to manufacturing process.

For manufacturing the tread 1 comprising the first rubber layer 5 together with the separating layer 7 and the second rubber layer 6 as to have a volume of the rivulet 71 or the micro grooves on the worn top face 41' enough to act as the extra micro edge and the volume to trap snow particles or water film, it is preferable to have a shape of the separating layer 7 already wavy in radial orientation at green (uncured) state of the tread 1. This also helps to control a height of the second rubber layer 6 not appearing too early nor too late on the worn top face 41'.

In this first embodiment, the second rubber layer 6 is arranged as to have only one radial peak within the contact element 4. The second rubber layer 6 may be arranged as to have several radial peaks within the contact element 4, not only in circumferential orientation but also in axial orientation.

A tread 21 according to a second embodiment of the present invention will be described referring to Fig. 4. Fig. 4 is a schematic cross sectional view of a tread according to a second embodiment of the present invention corresponding to the position taken along line IV-IV in Fig. 1. The construction of this second embodiment is similar to that of the first embodiment other than the arrangement shown in Fig. 4, thus description will be made referring to Fig. 4.

As shown in Fig. 4, the tread 21 comprises a contact face 22 intended to come into contact with the ground during rolling, and a plurality of grooves 23 of a depth D. The tread 21 comprising a contact element 24 being delimited via the plurality of grooves 23.

As shown in Fig. 4, the contact element 24 having one incision 42 opening to a top face 241 constituting a part of contact face 22 and extending in radially inward orientation. The incision 42 has a depth equivalent until a height to a level of a wear indicating mean 28.

As shown in Fig. 4, the tread 21 comprises at least two rubber layers, two first rubber layers 25 and one second rubber layer 26, both the first rubber layers 25 are located radially outward of the second rubber layer 6 and each is provided together with a separating layer 27 intended to connect with another rubber layer at radially inward of the first rubber layer 25, and the second rubber layer 26 is provided without the separating layer. The tread 21 further comprises a base rubber layer 9 located radially inward of the height equivalent to the wear indicating mean 28 and between the second rubber layer 26 and plies 15. In this second embodiment, a rubber composition constituting the first rubber layers 25 are the same as a rubber composition constituting the second rubber layer 26.

The tread 21 is constructed as to the separating layer 27 is at least equal to 0.2 mm distant from any outline of the contact element 24, including an outline of the incision 42.

Since the rubber composition constituting the first rubber layers 25 is the same as the rubber composition constituting the second rubber layer 26, it is possible to manufacture efficiently the tread 21 as the rubber composition constituting the contact element 24 is the same other than the separating layer 27.

Since the tread 21 further comprises the base rubber layer 9 located radially inward of the height equivalent to the wear indicating mean 28, it is possible to tune performance other than grip performance, for example handling performance or rolling resistance, without impacting grip performance thanks to the base rubber layer 9 located radially inward of the height equivalent to the wear indicating mean 28.

The invention is not limited to the examples described and represented and various modifications can be made there without leaving the framework defined by the appended claims.

[Examples]

In order to confirm the effect of the present invention, one type of tread of Example to which the present invention is applied and other type of tread of Reference were prepared.

The Example was a tread as described in the above the second embodiment with application of the construction of the above first embodiment; each the contact element provided with one incision, and having with one first rubber layer together with the separating layer and one second rubber layer. The Reference was the tire having the contact element provided with one incision, and having one first rubber layer and one second rubber layer without the separating layer. The material constituting the first rubber layer is the same between the Example and the Refence, the material constituting the second rubber layer is also the same between the Example and the Reference. Internal construction of both the Example and the Reference was the same typical radial tire construction other than described above. Both the Example and the Reference were buffed then made 10,000 km run for reproducing worn state of the tire which had 2.0 mm of remaining tread depth.

Wintry performance test:

- snow braking:

Prepared worn test tires were mounted onto all four wheel of a 2,500 cc front-wheel drive vehicle. On a straight path compacted snow surface, braking with ABS (Anti-lock Braking System) was applied at a speed of 50 km/h, distance until 5 km/h was measured.

The results are shown in table 1. In this table 1, results are represented by an index of 100 for Reference, higher the number indicates better the performance.

Non-wintry performance test:

- wet braking:

Prepared worn test tires were mounted onto all four wheel of a 2,500 cc front-wheel drive vehicle. On a straight path 1mm deep wet surface, braking with ABS (Anti-lock Braking System) was applied at a speed of 100 km/h, distance until 10 km/h was measured

The results are also shown in table 1. In this table 1, results are represented by an index of 100 for Reference, higher the number indicates better the performance.

[Table 1]

| | Example | Reference |
|---|---|---|
| Wintry performance (index) | 110 | 100 |
| Non-wintry performance (index) | 99 | 100 |

As seen from table 1, the Example shows better compromise between wintry and non-wintry performances with improvement on wintry performance at close to end of life, which cannot be achieved by treads disclosed in prior arts.

Visual observation:

Using the tread construction of the above Example, two other types of tread in which the present invention were applied and one type of Comparative Example was further prepared by changing the material constituting the separating layer having different $G*^{2.5}/C$ value. Just after preparation of worn test tires described above, well trained technician observed a state of the top face whether there is the rivulet or micro grooves having enough volume to act as an extra micro edge and a volume to trap snow particles or water film, and whether there is a crack in the separating layer.
Results are shown in table 2. The technician confirmed "OK" if the rivulet or the micro groove was created enough to act as an extra micro edge and a volume to trap snow particles or water film, otherwise "NO". The technician also confirmed "OK" if no crack was observed in the separating layer, otherwise "Cracks".

[Table 2]

| | Example 1 | Example 2 | Example 3 | Reference | Comparative example |
|---|---|---|---|---|---|
| $G*^{2.5}/C$ | 357 | 207 | 517 | 77 | 1347 |
| Rivulets | OK | OK | OK | NO | OK |
| Cracks | OK | OK | OK | OK | Cracks |

As seen from table 2, the Examples show creation of the rivulet or micro groove enough to act as an extra micro edge and a volume to trap snow particles or water film which leads improvement of the performance close to end of life, without creating cracks in the separating layer.

[Reference Signs List]

| | |
|---|---|
| 1, 21 | tread |
| 15 | plies |
| 2, 22 | contact face |
| 3, 23 | groove |
| 4, 24 | contact element |
| 41, 241 | top face |
| 42 | incision |
| 5, 25 | first rubber layer |
| 6, 26 | second rubber layer |
| 7, 27 | separating layer |
| 71 | rivulet |
| 8, 28 | wear indicating mean |
| 9 | base rubber layer |

**Claims**

1. A tread (1) for a tire having a contact face (2) intended to come into contact with ground during rolling, the tread (1) being provided with a plurality of grooves (3) of a depth D opening to the contact face (2), and a plurality of contact elements (4) being delimited by the plurality of grooves (3), each the plurality of contact elements (4) having a top face (41) constituting a part of the contact face (2), at least part of the plurality of grooves (3) being provided with a wear indicating means (8) indicating a legal wear limit of the tread (1),

the tread (1) comprising at least two rubber layers, at least one first rubber layer (5) and at least one second rubber layer (6), the first rubber layer (5) being located radially outward of the second rubber layer (6) and being provided together with a separating layer (7) intended to connect with another rubber layer at radially inward of the first rubber layer (5), and the second rubber layer (6) being provided without the separating layer (7), the tread being **characterized in that** a material constituting the separating layer (7) satisfies following relationship:

$$200 \leq \frac{G^{*2.5}}{C} \leq 1200$$

where G* is a dynamic shear complex modulus G* at 60°C of the material constituting the separating layer (7) in MPa, measured at a frequency of 10 Hz and under a maximum shear stress of 0.7 MPa, and C is an amount of wear in mm$^3$ of the material constituting the separating layer (7) measured in accordance with JIS K 7218, method A.

2. The tread (1) according to Claim 1, **wherein** a volume of the separating layer (7) in each the contact element (4) above a height equivalent to the wear indicating means (8) is less than 20%.

3. The tread (1) according to Claim 1 or Claim 2, **wherein** radially outermost of the second rubber layer (6) in each the contact element (4) on a plane perpendicular to both the top face (41) and axis of rotation of the tire is at least equal to 0.5 mm radially outward from a height equivalent to the wear indicating means (8).

4. The tread (1) according to any one of the Claims 1 to 3, **wherein** the separating layer (7) is at least equal to 0.2 mm distant from any outline of the contact element (4).

5. The tread (1) according to any one of the Claims 1 to 4, **wherein** a rubber composition constituting the first rubber layer (5) is the same as a rubber composition constituting the second rubber layer (6).

6. The tread (1) according to any one of the Claims 1 to 5, **wherein** the tread (1) further comprises a base rubber layer (9) located radially inward of a height equivalent to the wear indicating means (8).

7. A tire having a tread according to any one of the Claims 1 to 6.


**Patentansprüche**

1. Lauffläche (1) für einen Reifen mit einer Kontaktfläche (2), die dazu bestimmt ist, während des Rollens mit dem Boden in Kontakt zu kommen, wobei die Lauffläche (1) mit mehreren Rillen (3) mit einer Tiefe D**,** die zur Kontaktfläche (2) hin offen sind, und mehreren Kontaktelementen (4), die von den mehreren Rillen (3) begrenzt werden, versehen ist, wobei jedes der mehreren Kontaktelemente (4) eine Oberseite (41) aufweist, die einen Teil der Kontaktfläche (2) bildet, wobei mindestens ein Teil der mehreren Rillen (3) mit einem Verschleißanzeigemittel (8) versehen ist, das eine zulässige Verschleißgrenze der Lauffläche (1) angibt, wobei die Lauffläche (1) mindestens zwei Gummischichten, mindestens eine erste Gummischicht (5) und mindestens eine zweite Gummischicht (6) umfasst, wobei die erste Gummischicht (5) von der zweiten Gummischicht (6) aus radial nach außen hin angeordnet ist und zusammen mit einer Trennschicht (7) vorgesehen ist, die zur Verbindung mit einer anderen Gummischicht von der ersten Gummischicht (5) aus radial nach innen hin bestimmt ist, und wobei die zweite Gummischicht (6) ohne die Trennschicht (7) vorgesehen ist, wobei die Lauffläche **dadurch gekennzeichnet ist, dass** ein Material, das die Trennschicht (7) bildet, folgender Beziehung genügt:

$$200 \leq \frac{G^{*2,5}}{C} \leq 1200$$

wobei G* ein dynamischer komplexer Schermodul G* bei 60°C des Materials, das die Trennschicht (7) bildet, in MPa, gemessen bei einer Frequenz von 10 Hz und unter einer maximalen Scherspannung von 0,7 MPa ist, und C eine Verschleißmenge in mm$^3$ des Materials, das die Trennschicht (7) bildet, gemessen gemäß JIS K 7218, Verfahren A, ist.

2. Lauffläche (1) nach Anspruch 1, wobei ein Volumen der Trennschicht (7) in jedem Kontaktelement (4) über einer Höhe, die dem Verschleißanzeigemittel (8) entspricht, weniger als 20 % beträgt.

3.  Lauffläche (1) nach Anspruch 1 oder Anspruch 2, wobei von der zweiten Gummischicht (6) aus radial am weitesten außen liegend bei jedem Kontaktelement (4) auf einer Ebene, die senkrecht sowohl zu der Oberseite (41) als auch einer Drehachse des Reifens verläuft, mindestens 0,5 mm von einer zu dem Verschleißanzeigemittel (8) äquivalenten Höhe aus radial nach außen hin entspricht.

4.  Lauffläche (1) nach einem der Ansprüche 1 bis 3, wobei die Trennschicht (7) mindestens 0,2 mm von jeglicher Kontur des Kontaktelements (4) beabstandet ist.

5.  Lauffläche (1) nach einem der Ansprüche 1 bis 4, wobei eine Gummizusammensetzung, die die erste Gummischicht (5) bildet, einer Gummizusammensetzung, die die zweite Gummischicht (6) bildet, entspricht.

6.  Lauffläche (1) nach einem der Ansprüche 1 bis 5, wobei die Lauffläche (1) ferner eine Basisgummischicht (9) umfasst, die von einer zu dem Verschleißanzeigemittel (8) äquivalenten Höhe aus radial nach innen hin angeordnet ist.

7.  Reifen, der eine Lauffläche nach einem der Ansprüche 1 bis 6 aufweist.


**Revendications**

1.  Bande de roulement (1) pour un pneu comportant une face de contact (2) destinée à entrer en contact avec le sol lors du roulement, la bande de roulement (1) étant pourvue d'une pluralité de rainures (3) d'une profondeur D débouchant au niveau de la face de contact (2), et une pluralité d'éléments de contact (4) étant délimités par la pluralité de rainures (3), chacun de la pluralité d'éléments de contact (4) comportant une face supérieure (41) constituant une partie de la face de contact (2), au moins une partie de la pluralité de rainures (3) étant pourvues d'un moyen d'indication d'usure (8) indiquant une limite légale d'usure de la bande de roulement (1), la bande de roulement (1) comprenant au moins deux couches de gomme, au moins une première couche de gomme (5) et au moins une deuxième couche de gomme (6), la première couche de gomme (5) étant située radialement du côté extérieur relativement à la deuxième couche de gomme (6) et étant dotée d'une couche de séparation (7) destinée à être raccordée à une autre couche de gomme située radialement du côté intérieur relativement à la première couche de gomme (5), et la deuxième couche de gomme (6) n'étant pas dotée de la couche de séparation (7), la bande de roulement étant **caractérisée en ce qu'**un matériau constituant la couche de séparation (7) vérifie la relation suivante :

$$200 \leq \frac{G^{*2,5}}{C} \leq 1200$$

où G* est un module complexe de cisaillement dynamique G* à 60 °C du matériau constituant la couche de séparation (7) en MPa, mesuré à une fréquence de 10 Hz et sous une contrainte de cisaillement maximale de 0,7 MPa, et C est une quantité d'usure en $mm^3$ du matériau constituant la couche de séparation (7) mesurée conformément à JIS K 7218, méthode A.

2.  Bande de roulement (1) selon la revendication 1, dans laquelle un volume de la couche de séparation (7) dans chaque élément de contact (4) au-dessus d'une hauteur correspondant au moyen d'indication d'usure (8) est inférieur à 20 %.

3.  Bande de roulement (1) selon la revendication 1 ou la revendication 2, dans laquelle la partie radialement extérieure extrême de la deuxième couche de gomme (6) dans chaque élément de contact (4) sur un plan perpendiculaire à la fois à la face supérieure (41) et à l'axe de rotation du pneu s'étend sur au moins 0,5 mm radialement vers l'extérieur à partir d'une hauteur correspondant au moyen d'indication d'usure (8).

4.  Bande de roulement (1) selon l'une quelconque des revendications 1 à 3, dans laquelle la couche de séparation (7) est à une distance au moins égale à 0,2 mm de toute partie de contour de l'élément de contact (4).

5.  Bande de roulement (1) selon l'une quelconque des revendications 1 à 4, dans laquelle une composition de gomme constituant la première couche de gomme (5) est identique à une composition de gomme constituant la deuxième couche de gomme (6).

6. Bande de roulement (1) selon l'une quelconque des revendications 1 à 5, la bande de roulement (1) comprenant, en outre, une couche de gomme de base (9) située radialement du côté intérieur relativement une hauteur correspondant au moyen d'indication d'usure (8).

7. Pneu, ayant une bande de roulement selon l'une quelconque des revendications 1 à 6.

[Fig. 1]

[Fig. 2]

[Fig. 3]

[Fig. 4]

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0378090 A
- JP 2006142843 A
- JP 2002079807 A

- JP 2007168651 A
- JP 2006306281 A
- JP 2001080314 A